# EUROPÄISCHE PATENTSCHRIFT

(11) **EP 3 537 863 B1**
(45) Veröffentlichungstag und Bekanntmachung des Hinweises auf die Patenterteilung: **03.04.2024**
(21) Anmeldenummer: 17703756.1
(22) Anmeldetag: 08.02.2017
(51) Int. Cl.: A01B 69/04, A01B 79/00

(54) **VERFAHREN ZUM PRÄDIKTIVEN ERZEUGEN VON DATEN ZUR STEUERUNG EINES FAHRWEGES UND EINES BETRIEBSABLAUFES FÜR LANDWIRTSCHAFTLICHE FAHRZEUGE UND MASCHINEN**
METHOD FOR PREDICTIVELY GENERATING DATA FOR CONTROLLING A TRAVEL PATH AND AN OPERATING SEQUENCE FOR AGRICULTURAL VEHICLES AND MACHINES
PROCÉDÉ DE GÉNÉRATION DE DONNÉES DE MANIÈRE PRÉDICTIVE DESTINÉ À LA COMMANDE D'UNE VOIE ET D'UNE SÉQUENCE DE FONCTIONNEMENT POUR VÉHICULES ET MACHINES AGRICOLES

(30) Priorität: 10.11.2016 DE 102016121523
(43) Veröffentlichungstag der Anmeldung: 18.09.2019
(73) Patentinhaber: LACOS GmbH, 07937 Zeulenroda-Triebes (DE)
(72) Erfinder: DAMME, Thomas, 07907 Göschitz (DE); DAMME, Bernd, 07937 Langenwolschendorf (DE)
(74) Vertreter: Meissner Bolte Partnerschaft mbB
(86) Internationale Anmeldenummer: PCT/EP2017/052715
(87) Internationale Veröffentlichungsnummer: WO 2018/086764

(56) Entgegenhaltungen:
- EP-A1- 2 980 668
- WO-A1-2012/007549
- WO-A1-2016/100088
- DE-A1-102012 017 118
- US-A1- 2011 022 267
- US-A1- 2011 054 729

## Beschreibung

Die Erfindung betrifft ein Verfahren zum prädiktiven Erzeugen von Daten zur Steuerung eines Fahrweges und eines Betriebsablaufes für landwirtschaftliche Fahrzeuge und Maschinen nach Anspruch 1.

Aus dem Stand der Technik sind Vorrichtungen und Verfahren bekannt, mit denen eine Echtzeitsteuerung von landwirtschaftlichen Fahrzeugen und landwirtschaftlichen Maschinen erfolgen kann. Derartige Vorrichtungen und Verfahren werden beispielsweise in den Druckschriften DE 1020111078292 A1, EP 0887660 B1, der EP 1527667 B1 oder auch der EP 0970505 B1 beschrieben.

Mit den dort genannten Verfahren ist es möglich, eine gegebene landwirtschaftliche Nutzfläche, beispielsweise ein Feld, in einer optimierten Weise abzufahren. Dabei wird der Fahrweg in Echtzeit mittels eines Navigationssystems verfolgt. Zusätzliche Sensoren, die sich beispielsweise am Fahrzeug oder im Bereich der durch das Fahrzeug gezogenen oder in sonstiger Weise bewegten landwirtschaftlichen Maschine befinden, zeichnen lokale Gegebenheiten des Fahrwegs, beispielsweise Hanglagen oder so genannte Stampfwinkel des Fahrzeuges, auf. Hierdurch wird verhindert, dass das Fahrzeug einen gefährlichen Kippwinkel einnimmt, dass die Werkzeuge der landwirtschaftlichen Maschine sich in den Boden eingraben oder dass die Bodenbearbeitung, das Ausbringen von Saatgut, Pflanzenschutzmitteln oder Dünger infolge der Bodenlage in einer ungenügenden Weise erfolgt. Es ist somit möglich, das Fahrzeug gegen zu steuern, wenn oder kurz bevor eine kritische oder in Hinblick auf die Bodenbearbeitung nachteilige oder nicht optimale Situation eintritt.

Eine derartige Anordnung wird beispielsweise in der US 2011/0022267 A1 offenbart. Diese beschreibt ein Überprüfungssystem zum Erkennen und Bewerten von Überschlagsrisiken bei einem landwirtschaftlichen Fahrzeug.

Die aus dem Stand der Technik bekannten Verfahren und Vorrichtungen sind auf Echtzeitsteuerungen ausgerichtet, die nur ein zeitlich relativ eng begrenztes Zeitfenster erfassen. In der landwirtschaftlichen Praxis ist es jedoch nicht immer nur wichtig, in einer gegebenen Situation kurz zuvor oder danach die richtige Steuerung auszuführen. Eine derartige Steuerung kann immer nur operativ eingesetzt werden.

Bedeutsamer und wichtiger für eine langfristige Bearbeitung einer gegebenen landwirtschaftlichen Nutzfläche ist es, zukünftige Entwicklungen vorher zu sehen und unter diesen naturgemäß nur begrenzt erfassbaren Randbedingungen die richtigen und optimalen Entscheidungen über den Einsatz der landwirtschaftlichen Fahrzeuge und Maschinen schon hinreichend lange vorab zu treffen. Dies betrifft insbesondere Situationen, die noch gar nicht eingetreten sind, aber die schon dann bedeutsam sein können, wenn das landwirtschaftliche Fahrzeug bzw. die landwirtschaftliche Maschine noch gar nicht im Einsatz ist.

Eine Echtzeitsteuerung ist beispielsweise nur sehr begrenzt hilfreich, wenn ein landwirtschaftliches Fahrzeug sich momentan in einem schlammigen Boden festgefahren hat, weil diese Situation vorab unbekannt gewesen ist oder deswegen kurzfristig über eine längere Fahrstrecke unter zusätzlichen Aufwendungen umdirigiert werden muss. Beides sollte am besten vorher vermieden werden.

Es besteht somit die Aufgabe, ein Verfahren anzugeben, mit dem die genannten Nachteile einer Echtzeitsteuerung landwirtschaftlicher Fahrzeuge und Maschinen beseitigt werden können und mit dem eine auf die Zukunft bezogene, d.h. prädiktive Steuerung möglich wird.

Die Aufgabe wird mit einem Verfahren zum prädiktiven Erzeugen von Daten zur Steuerung eines Fahrweges und eines Betriebsablaufes für landwirtschaftliche Fahrzeuge und Maschinen nach Anspruch 1 gelöst. Die Unteransprüche enthalten zweckmäßige und/oder vorteilhafte Ausgestaltungen des Verfahrens.

Das Verfahren zum prädiktiven Erzeugen von Daten zur Steuerung eines Fahrweges und eines Betriebsablaufes für landwirtschaftliche Fahrzeuge und Maschinen wird erfindungsgemäß mit folgenden Verfahrensschritten ausgeführt:
Es erfolgt ein automatisches Erfassen und Speichern von Fahrzeug- und/oder Maschinendaten über eine an Einzelfahrzeugen und/oder Einzelmaschinen angeordnete Sensoreinrichtung zum Erzeugen eines Fahrzeug- und Maschinenmodells. Ebenso wird ein Sammeln und Speichern von Daten über eine dreidimensionale Geländetopographie und/oder von Daten über eine aktuelle und/oder prognostizierte Geländebeschaffenheit und/oder Witterungsbedingung ausgeführt, mit dem ein prädiktives dreidimensionales georeferenziertes Geländemodell erstellt wird.

In einem nächsten Schritt erfolgt ein optimierendes Abbilden des Fahrzeug- und Maschinenmodells auf das dreidimensionale prädiktive Geländemodell und ein Errechnen von Fahrwegsteuerdaten zum Festlegen eines Fahrweges und/oder Maschinensteuerdaten zur Steuerung von Maschinenkomponenten.

Abschließend erfolgt ein Ausgeben und Übermitteln der Fahrwegsteuerdaten und/oder der Maschinensteuerdaten an eine Steuereinheit des landwirtschaftlichen Fahrzeuges und/oder der landwirtschaftlichen Maschine.

Das erfindungsgemäße Verfahren stellt somit darauf ab, ein Geländemodell zu erstellen, das prädiktiv ausgelegt ist. Das bedeutet, dass das Geländemodell nicht nur die aktuell vorliegende Topographie abbildet, sondern die zu bearbeitenden landwirtschaftlichen Nutzflächen so darstellt, wie sie aller Voraussicht nach in der Zukunft unter Berücksichtigung einer Reihe von Annahmen und Prognosen sein werden. Das Geländemodell wird somit nicht nur als ein räumlicher Ist-Zustand vorgeplant, sondern repräsentiert auch eine vorweg genommene zeitliche Entwicklung, die mit den Daten über einen verfügbaren landwirtschaftlichen Fahrzeug- und Maschinenpark abgeglichen wird. Das bedeutet, dass ein aktuell und künftig zur Verfügung stehender Fahrzeug- und Maschinenbestand virtuell mit einem sich möglicherweise in Zukunft einstellenden Gelände in Beziehung gesetzt und optimierend eingeplant wird, sodass hierdurch schon diejenigen Steuerdaten generiert werden können, die für einen zukünftigen Einsatz eines gegebenen Fahrzeug- und Maschinenparks notwendig sind und mit denen die Steuereinheiten der betreffenden Fahrzeuge und Maschinen vorab ausgestattet werden können.

Bei einer Ausführungsform werden bei dem automatischen Erfassen der Fahrzeugdaten Daten über eine Fahrzeuggeometrie und über den aktuellen und/oder vorhersehbaren Betriebszustand des landwirtschaftlichen Fahrzeuges telemetrisch von einem Bordsystem fortlaufend erfasst und an eine zentrale Datenbank übermittelt.

Bei einer Ausführungsform werden bei dem automatischen Erfassen der Maschinendaten Daten über eine Maschinengeometrie und einen aktuellen und/oder vorhersehbaren Betriebszustand landwirtschaftlicher Bearbeitungskomponenten fortlaufend telemetrisch erfasst und an eine zentrale Datenbank übermittelt.

Die telemetrische Erfassung ermöglicht ein zeitliches Erfassen und Verfolgen des Betriebszustandes der Fahrzeuge des Fahrzeugparkes bzw. der einzelnen landwirtschaftlichen Maschinen des Maschinenparkes, sie ist somit aktuell, gibt aber auch Aufschluss über den zu erwartenden Trend im Betriebszustand innerhalb eines Vorhersagezeitraums. Dadurch kann der in Zukunft zu erwartende Zustand des zu bearbeitenden Geländes mit dem in Zukunft zu erwartenden Betriebszustand des Fahrzeug- und Maschinenparks optimierend abgeglichen werden.

Bei einer Ausgestaltung werden bei dem Erzeugen des Fahrzeug- und Maschinenmodells die automatisch erfassten Fahrzeugdaten und die automatisch erfassten Maschinendaten variabel kombiniert, wobei eine Vielzahl verschiedener Fahrzeugtypen mit einer Vielzahl verschiedener Maschinentypen kombiniert werden können. Hierdurch wird auf der Ebene der virtuellen Modelle berücksichtigt, dass verschiedene reale Fahrzeugtypen, beispielsweise verschiedene Zugmaschinen und Traktorenmodelle, verschieden mit daran angekoppelten landwirtschaftlichen Maschinen zusammenwirken können.

Erfindungsgemäß erfolgt das Sammeln der Daten über die dreidimensionale Geländetopographie über ein Auswerten einer vorab generierten Geodatenmenge. Hierzu können die allgemein verfügbaren Daten aus vorhandenen Georeferenzierungs- und Kartierungssystemen verwendet werden.

Erfindungsgemäß werden bei dem Sammeln von Daten über die aktuelle und/oder prognostizierte Bodenbeschaffenheit die Daten einer Vielzahl im realen Gelände verteilter automatischer Messstationen, insbesondere von Messstationen über eine Bodenfeuchte und/oder einer gefallenen Niederschlagsmenge, erfasst und der Geodatenmenge zugeordnet.

Erfindungsgemäß wird bei dem optimierenden Abbilden des Fahrzeug- und Maschinenmodells auf das dreidimensionale Geländemodell ein erster Optimierungsalgorithmus ausgeführt, bei dem ein optimaler Fahrweg unter Berücksichtigung der aktuellen und/oder vorhersehbaren Bodenbeschaffenheit des Geländes und der Vermeidung von für das Fahrzeug- und Maschinenmodell gefährlichen Rutsch-, Hang- und/oder Kipplagen berechnet wird, wobei bei einem zweiten Optimierungsalgorithmus ein auf den Fahrweg angepasster optimierter Betriebszustand der landwirtschaftlichen Maschine errechnet wird und die Daten des optimalen Fahrwegs und die Daten des optimierter Betriebszustandes in die Fahrweg- und die Maschinensteuerdaten überführt werden.

Der erste und/oder der zweite Optimierungsalgorithmus können durch das Vorgeben veränderbarer Randbedingungen und/oder Gewichtungen nutzerspezifisch anpassbar und beeinflussbar sein.

Das Verfahren kann in einem offline-Modus betreibbar sein, wobei die Verfahrensschritte auf einem nicht mit dem Fahrzeug und/oder der landwirtschaftlichen Maschine verbundenen externen datenverarbeitenden System, insbesondere einem PC, einem Tablet-Computer und/oder einem Cloudcomputersystem, ausgeführt werden.

Das Verfahren kann aber auch in einem online-Modus betreibbar sein, wobei die Verfahrensschritte auf einer in dem Fahrzeug- und/oder der landwirtschaftlichen Maschine integrierten Steuerungseinheit, insbesondere einem Fahrzeugcomputer, ausgeführt werden.

Bei einer Ausgestaltung des Verfahrens ist das prädiktive Erzeugen der Daten durch ein Erfassen mit einem Erfassen von operativen Echtzeitdaten ergänzt, wobei durch die operativen Echtzeitdaten ein momentaner Ist-Zustand des Fahrzeuges und/oder der Landwirtschaftlichen Maschine und/oder von Geländebeschaffenheiten erfasst wird. Dabei werden die operativen Echtzeitdaten durch die Steuereinheit des Fahrzeuges und/oder der landwirtschaftlichen Maschine aktualisierend den prädiktiv ermittelten Fahrwegsteuerdaten hinzugefügt.

In einem solchen Fall ergeben die prädiktiv erzeugten Steuerungsdaten für die Fahrzeuge oder Maschinen keine starre Vorgabe eines Fahrweges oder diverser Betriebszustände und -abläufe, sondern können operativ modifiziert werden.

Das Verfahren soll nachfolgend anhand beispielhafter Ausführungsformen näher erläutert werden. Zur Verdeutlichung dienen die Figuren 1 bis 9. Es werden für gleich bzw. gleichwirkende Bestandteile und Abläufe dieselben Bezugszeichen verwendet.

Es zeigt:
- Fig. 1: eine beispielhafte Zugmaschine mit einem aus der Zugmaschine abgeleiteten Fahrzeugmodell in einer Draufsicht,
- Fig. 2: die Zugmaschine aus Fig. 1 in einer Seitenansicht mit dem aus der Zugmaschine abgeleiteten Fahrzeugmodell, ebenfalls in einer Seitenansicht,
- Fig. 3: eine beispielhafte landwirtschaftliche Maschine und ein aus der Maschine abgeleitetes Maschinenmodell in einer Draufsicht,
- Fig. 4: das Fahrzeugmodell aus Fig. 1 in Kombination mit dem Maschinenmodell aus Fig. 3 in einem Teilbereich eines 3-dimensionalen Geländemodells,
- Fig. 5: das Fahrzeugmodell aus Fig. 2 in einem simulierten prädiktiven Abgleich mit einem Teilbereich des 3-dimensionalen Geländemodells zum Prüfen eines möglichen Aufsetzens des Fahrzeugs,
- Fig. 6: ein Fahrzeugmodell in einem Teilbereich des 3-dimensionalen Geländemodells in einem prädiktiven Abgleich zum Prüfen eines möglichen Kippens des Fahrzeuges,
- Fig. 7: ein beispielhaftes Erzeugen eines prädiktiven Fahrweges in einem 3-dimensionalen Geländemodell unter Berücksichtigung von prädiktiv bestimmten Bodenbeschaffenheiten,
- Fig. 8: einen beispielhaften Programmablaufplan für eine interaktive Vorplanung,
- Fig. 9: einen beispielhaften Programmablaufplan für ein prädiktives online Warnsystem und eine Fahrerassistenz.

Nachfolgend soll die Nutzung eines 3D-Geländemodells zur prädiktiven Vorplanung von Fahrtrouten landwirtschaftlicher Maschinen anhand einiger Ausführungsbeispiele beschrieben werden.

Die Vorplanung erfolgt in einer ersten Variante vor dem Feldeinsatz der Fahrzeuge mittels eines PC, Tablets, eine Web-Applikation oder eines Cloud-Dienstes in einem Offlinemodus. Das bedeutet, dass die Verfahrensschritte auf einem nicht im Fahrzeug oder der Landmaschine enthaltenen Computersystem sondern beispielsweise in einer Einsatzzentrale ausgeführt werden, wobei die dabei erzeugten Resultate anschließend an eine Bordsystem der einzelnen Fahrzeuge und Maschinen überspielt werden.

Alternativ kann die Vorplanung direkt auf mobilen Fahrzeugcomputern in einem Onlinemodus erfolgen. Sowohl der Offlinemodus als auch der Onlinemodus können mit oder auch ohne den Einsatz eines web- oder cloudbasierten Datenverarbeitung und Kommunikation erfolgen. Die ermittelten optimierten Routen können anschließend an ein oder auch an mehrere Fahrzeuge als Zielrouten übergeben werden.

Die Zielroute ist allerdings nicht starr vorgegeben. Während der Fahrt auf der geplanten Route werden mit Hilfe von Sensoren des Fahrzeugs die aktuellen Bedingungen erfasst und die Situation auf mögliche notwendige Veränderungen der Route überprüft. Gegebenenfalls werden Warnungen bei gefährlichen Situationen ausgegeben, es wird dann eine neue Route berechnet, oder es werden Maschinenfunktionen eingeleitet, um auf diese Veränderungen zu reagieren.

Sowohl der Onlinemodus als auch der Offlinemodus können bei der Errechnung der Route und bei der Modifizierung der Route während der Fahrt unabhängig voneinander zum Einsatz kommen. Das bedeutet insbesondere, dass die Route offline errechnet und online modifiziert wird.

Die sowohl offline als auch online erfolgende Vorplanung betrifft dynamische Daten des Systems aus landwirtschaftlichem Fahrzeug, landwirtschaftlicher Maschine und Kombinationen aus landwirtschaftlichem Fahrzeug und Maschine. Beispiele für derartige dynamische Daten sind Fahrzeug- und Implement-Positionen, Geschwindigkeiten, Fahrtrichtung, Lenkdaten, Fahrzeug- und Implement-Daten wie z.B. einstellbare Gestänge-Winkel, Ausbringungsmengen und voraussichtliche Ladevolumen eines Einzelfahrzeuges oder einer Flotte. Diese dynamischen Daten werden auch als Weg oder Spur bezeichnet.

Sämtliche dynamische Systemdaten werden hierbei unter Berücksichtigung der statischen Systemdaten vorausgeplant. Statische Systemdaten sind Systemdaten, die sich zeitlich nicht ändern, wie z.B. gegebene Fahrzeuggeometrien und Lasten, sowie das rein geometrische 3D-Geländeprofil eines Schlages.

Die Vorplanung zielt darauf ab, eine Vorausschau zur Vermeidung von schwierigen Situationen zu ermöglichen. Die schwierigen Situationen betreffen insbesondere Umsturz- und Kollisionsgefahren mit Hindernissen und anderen Fahrzeugen einer gegebenen Fahrzeugflotte sowie die Gefahr einer Kollision des Bodens von Auslegern und/oder Gestängen mit einem Untergrund. Zur Gefahrenvermeidung werden Prozeduren generiert, die auf eine Umfahrung von Verwerfungen oder Terrassen, auf eine Lenkung in engen Kurven abzielen und das Befahren in einer bestimmten Weise so ermöglichen, dass die kritischen Situationen nicht in der Realität auftreten.

Die Vorplanung zielt außerdem auf eine optimale Maschinennutzung und eine optimale Bodenbearbeitung des Geländes und Bearbeitung des Pflanzenbestandes (z.B. Ernte) ab. Dies betrifft insbesondere das Vermeiden von Über- bzw. Unterstreuungen oder -düngungen durch ein ungleichmäßiges Ausbringen an Hanglagen. Außerdem betrifft die Vorplanung auch die Planung bzw. Berechnung einer optimalen Spur mit den beispielsweisen Kriterien eines minimalen Weges, einer minimalen Zeit, minimierten Kosten, eines minimalen Verbrauch bei einer Maximierung der mit diesen Ressourcen bearbeiteten Nutzfläche und eine Minimierung der Bodenverfestigung.

Es erweist sich als zweckmäßig, verschiedene Optimierungsstrategien für verschiedene Gebiete auch verschieden so festzulegen, dass hierdurch das Vermeiden der genannten schwierigen Situationen als Vorgabeparameter berücksichtigt ist. So hat beispielsweise bei Flächen mit kritischen Hanglagen die Optimierungsstrategie des möglichst kurzen Weges zugunsten einer Optimierungsstrategie der Vermeidung einer Kippgefahr eine höhere Priorität, während in einem angrenzenden flachen Geländebereich die Optimierungsstrategie des minimierten Weges uneingeschränkt priorisiert bleibt.

Die Benutzung dieser Daten dient insbesondere zur Vorausplanung der Bearbeitung (Pflege, Pflanzenschutz, Düngung) und Ernte von Pflanzenbeständen auf einem gegebenen Gelände.

Als nächster Schritt erfolgt eine Übergabe und Übertragung der geplanten, optimierten Routen an die entsprechenden landwirtschaftlichen Maschinen. Dies erfolgt beispielsweise über einen Satz von Steuerbefehlen.

Die online ausgeführte prädiktive Planung auf dem mobilen Computer der landwirtschaftlichen Fahrzeuge und Maschinen bildet hierbei einen besonders wichtigen Aspekt.

Die online ausgeführte Vorausschau erfolgt unter Berücksichtigung des 3D-Geländeprofils eines Schlages, gegebener Fahrzeuggeometrien und Lasten, der auf der Maschine bzw. am Fahrzeug befindlichen Sensoren, und eines möglicherweise vorhandenen Kommunikationskanales zu anderen Fahrzeugen. Über den Kommunikationskanal mit anderen Fahrzeugen und Maschinen erfolgt zwischen den jeweiligen Bordcomputern ein Informationsaustausch über deren Zielrouten und deren Sensoren. Zusätzlich kann über diesen Kommunikationskanal die vorgeplante Route übermittelt werden, wobei hierdurch die Einhaltung der Zielroute eines Einzelfahrzeuges oder einer Flotte insgesamt gesichert wird. Die online ausgeführte Vorplanung dient dann ebenso auch einer Vermeidung von Kollisionen zwischen Flottenfahrzeugen.

Über diese prädiktive Vorausschau hinaus kann eine Echtzeit-Vorausberechnung einer optimalen Spur zum Erreichen eines vorgegebenen Optimierungskriteriums erfolgen. Eine solche Vorgehensweise ist dann möglich, wenn eine Zielroute nicht absolut verbindlich vorgegeben wurde oder wenn von der Zielroute abgewichen werden soll oder muss. Dann geht die prädiktive Vorausberechnung in eine operative Berechnung in Echtzeit als eine so genannte In-Field-Navigation über. Diese Berechnung erfolgt unter Berücksichtigung des Vermeidens der oben genannten schwierigen Situationen und sie geht von der aktuellen Fahrzeugsituation im realen Gelände unter aktuell vorliegenden Einsatzbedingungen aus, sodass hierdurch ein selbsttätiges zielsuchendes Verfahren für autonome Fahrzeuge realisiert ist.

Auch hier kann eine Ausweichroute berechnet werden, um zum Beispiel das Umkippen oder Kollisionen zwischen den Fahrzeugen zu vermeiden. Ebenfalls lassen sich hiermit auch Schlagbearbeitungsstrategien vorausplanen, die zum Beispiel durch Veränderungen der Richtungen der Fahrspuren realisiert werden.

Das nachfolgend anhand von Ausführungsbeispielen erläuterte Verfahren dient somit einer Berechnung und Nutzung von prädiktiv ermittelten Fahrspuren in einem 3-dimensionalen Gelände zur Vermeidung von gefährlichen Situationen für landwirtschaftliche Maschinen. Die hier vorliegenden Verfahrensschritte sind prädiktiv angelegt und basieren auf Vorhersagemodellen für zukünftige Entwicklungen. Die dabei ermittelten Fahrspuren sind letztlich dreidimensional und liegen im Ergebnis als 3D-Fahrspuren vor.

Die Berechnung der Fahrspuren erfolgt hier mit den Algorithmen für eine 2D-Berechnung mit einer zusätzlichen Berücksichtigung der Höhe aus dem 3D-Geländemodell. Die dabei abgeleiteten 3D-Fahrspuren lassen sich für verschiedene Zwecke nutzen. Dies betrifft insbesondere eine Warnung vor dem Umkippen von Landmaschinen am Hang und deren Anzeige in Form einer akustischen Warnung oder einer Anzeige auf einem Display.

Ausgehend davon erfolgt das Berechnen einer Ausweichroute, um ein derartiges Umkippen zu vermeiden. Dies erfolgt durch ein Vorausberechnen einer Schlagbearbeitungsstrategie. Wichtig ist hier insbesondere die Veränderung der Richtung der Fahrspuren. Möglich ist auch eine automatische Reduzierung der Geschwindigkeit durch einen entsprechend generierten Steuerbefehl, um das Umkippen zu vermeiden.

Einen weiteren Aspekt bildet die Nutzung des 3D-Geländemodells zur Steuerung von Bearbeitungs-, Ausbringungs- und Ernteprozessen in hängigem Gelände. Hierdurch werden eine vorausschauende Steuerung der Ausbringmenge bei Düngerstreuern und eine Steuerung des Streuwinkels in Abhängigkeit von der Hangneigung möglich. Die erfolgt beispielsweise dadurch, indem berücksichtigt wird, dass bei sonst unveränderten Betriebsparametern hangabwärts eine kürzere Streubreite und hangaufwärts eine weitere Streubreite vorliegt, wobei hier entsprechende Steuerungsmaßnahmen erfolgen mit dem Ziel einer exakten Einhaltung der Arbeitsbreite.

Darüber hinaus wird durch die Nutzung des 3D-Geländemodells auch eine durch die Feldbearbeitung hervorgerufene Erosion dadurch vermieden, indem vorab eine entsprechende Bearbeitungsstrategie erstellt wird und beispielsweise ein Weg errechnet wird, der quer zu einer gegebenen Hangneigung verläuft.

In entsprechender Weise erfolgt beispielsweise auch eine prädiktive Steuerung der Gestängeführung von Pflanzenschutz-Spritzen zur Vermeidung von Aufsetzern des Gestänges auf dem Boden oder Pflanzenbestand oder auch eine vorausschauende Steuerung der Schneidwerkführung von Mähdreschern und Häckslern, damit Aufsetzer vermieden werden können. Es ist ebenso auch Bestandteil des Verfahrens eine vorausschauende Mähstrategie zu berechnen das Vermeiden des Umkippens auch berücksichtigt wird.

Ein weiterer Aspekt ist die vorausschauende Steuerung von Bodenbearbeitungsmaschinen, beispielsweise zum Pflügen, Eggen, Grubbern oder Mulchen und der Ausgleich zur Abdrift am Hang, um ein optimales Bearbeitungsergebnis zu erreichen.

In Verbindung damit kann auch eine Berechnung eines 3D-Modells eines vorliegenden oder zu erwartenden Pflanzenbestandes in Verbindung mit dem 3D-Geländemodell erfolgen. Hierzu lassen sich Informationen über die Sonneneinstrahlung oder die sonstigen Witterungseinflüsse, insbesondere unter Einbeziehung so genannter Wetterseiten oder Sonnenhänge im Rahmen von Prognosen mit berücksichtigen. Hierzu erfolgt eine Berechnung der exakten Fläche des Feldes unter Berücksichtigung der unterschiedlichen Höhen im Gelände im Rahmen einer 3D-Berechnung statt einer nur flächenhaften 2D-Berechnung. Hieraus erfolgt dann die Berechnung des Pflanzenbestandes aus der exakten Größe des Feldes und einer Bestandshöhe der Pflanzen.

Die Nutzung des 3D-Modells von Pflanzenbeständen kann auch zur exakten Ermittlung der Biomasse aus dem Pflanzenbestand zur Steuerung von Abfahr-Logistik-Prozessen eingesetzt werden. Hierdurch wird insbesondere eine vorausschauende Steuerung der Gestängeführung von Pflanzenschutz-Spritzen zur optimalen Einhaltung des Abstandes zum Pflanzenbestand möglich.

Es ist ebenfalls möglich, 3D-Modelle von Hindernissen zu erzeugen. Hierzu erfolgt eine dreidimensionale Vermessung von Hindernissen auf landwirtschaftlichen Flächen. wie z.B. von Strommasten, Bäumen, Baumreihen oder Gebüsch und eine Einbeziehung der Hindernisse in das bestehende 3D-Geländemodell.

Dieses 3D-Modell mit den dabei einbezogenen Hindernissen kann auch dazu dienen, um Abstürze beim Befliegen des realen Geländes mittels unbemannter Kleinflugzeuge bzw. Drohnen durch Kollision mit den Hindernissen durch eine Vorausberechnung des Kurses unter Einbeziehung des 3D-Modells zu vermeiden. Dies dient außerdem auch einer Vermeidung von Kollisionen der landwirtschaftlichen Maschinen, insbesondere des Gestänges bei PS-Spritzen mit Hindernissen, wie beispielsweise Masten, Baumreihen oder Gebüsch durch die Vorausberechnung des Kurses unter Einbeziehung des 3D-Modells.

Möglich ist jedoch stets auch eine teilflächenspezifische Festlegung verschiedener Optimierungsstrategien. Bei diesen unterschiedlichen Optimierungsstrategien kann das Berücksichtigen und Vermeiden von schwierigen und kritischen Situationen im Vordergrund stehen sodass die Optimierungskriterien der In-Field-Navigation mindestens in einzelnen Punkten im Geländemodell von sekundärer Bedeutung sind. Dies betrifft das bereits genannte Umkippen von Fahrzeug und landwirtschaftlicher Maschine, eine Lenkung in engen Kurven, die Vermeidung einer Kollision mit Hindernissen, das Ermitteln einer günstigen Umfahrung von Verwerfungen oder Terrassen bei gegebenen Fahrzeuggeometrien und Lasten, also Gefahrenquellen, deren Vermeidung Priorität hat. Ausgehend von der Benutzung dieser Daten erfolgt eine Vorausplanung von Bepflanzungen und Pflanzreihen.

Eine andere Möglichkeit besteht in einer online ausgeführten Vorplanung des Weges, die auf mobilen Fahrzeugcomputern ausgeführt wird. Die mobilen Fahrzeugcomputer befinden sich auf den jeweiligen Einzelfahrzeugen oder in jedem Fahrzeug einer Fahrzeugflotte und ermöglichen somit eine auf jedem Fahrzeug einzeln ablaufende Vorausplanung zur Vermeidung von Umstürzen, Kollisionen mit Hindernissen und Flottenfahrzeugen, eines Aufsetzens (Kollision mit Untergrund) von Auslegern / Gestängen bzw. eine Über-/Unterstreuung oder - düngung durch ungleichmäßiges Ausbringen an Hängen. Sie gewährleisten eine Berechnung der optimalen Spur.

Wie bei der offline ausgeführten Vorplanung ist auch bei der online ausgeführten Vorplanung ein teilflächenspezifisches Festlegen verschiedener Optimierungsstrategien möglich. Diese wird unter Berücksichtigung des Vermeidens von schwierigen Situationen, insbesondere eines Umkippens, der Lenkung in engen Kurven, des Vermeidens eines Kollision mit Hindernissen, erforderlichen Umfahrungen von Verwerfungen oder Terrassen für landwirtschaftliche Fahrzeuge und bei gegebenen Fahrzeuggeometrien und Lasten ausgeführt, wobei eine Benutzung dieser Daten zur Vorausplanung von Bepflanzungen / Pflanzreihen erfolgt.

Ein Bestandteil des Verfahrens ist ein automatisches und gegebenenfalls telemetrisches Auslesen der Fahrzeuggeometrien aus den Fahrzeugdaten eines Einzelfahrzeuges oder einer Flotte und Nutzung zur Vorplanung und Warnung. Hierzu werden an den Fahrzeugen entsprechende Sensoren angeordnet, über die das Auslesen erfolgen kann. In Verbindung damit kann auch eine Übertragung der Informationen auf andere Maschinen, insbesondere innerhalb einer Flotte, erfolgen, damit diese ebenfalls den optimierten Spuren, gegebenenfalls auch zeitversetzt, folgen können.

Ein Bestandteil des Verfahrens ist das Ausführen einer online erfolgenden Zustandserfassung und Warnung, die beispielsweise durch den mobilen Fahrzeugcomputer ausgeführt wird und zur Vorausschau vor gefährlichen Situationen dient, die durch die Geometrien auf dem Feld hervorgerufen werden.

Eine derartige Warnung kann rechtzeitig die Gefahr eines Umkippens der Landmaschine an einer Hanglage signalisieren und beispielsweise in Form einer akustischen Warnung und/oder einer Anzeige auf einem Display im Armaturenbrett erfolgen und dem Fahrer die bestehende Gefahr anzeigen. In Verbindung kann auch das Berechnen einer Ausweichroute erfolgen, um ein derartiges Umkippen zu vermeiden. Dies kann außerdem mit einer Vorausberechnung einer Schlagbearbeitungsstrategie erfolgen, um das Umkippen zu vermeiden. Hierzu kann eine Veränderung der Richtung der Fahrspuren erfolgen. Dies kann auch mit einer automatischen Reduzierung der Geschwindigkeit verbunden sein.

Das 3D-Geländemodell wird darüber hinaus auch als ein Element der Vorschau und zur Vorbereitung von Maschinenreaktionen genutzt. Dies erfolgt insbesondere in Form einer online ausgeführten Vorplanung auf einem mobilen Fahrzeugcomputer als ein hier vorgesehenes Element. Für eine derartige prädiktiv erfolgende Vorplanung wird die Trägheit des Regelsystems des Fahrzeugs und/oder der Landmaschine, d.h. der Mechanik, der Hydraulik und/oder Pneumatik mit berücksichtigt. Im Rahmen dieser Berücksichtigung der Trägheit wird zum Beispiel ein rechtzeitiges Abschalten von Düsen an einem Vorgewende, eine Einstellung eines Gestänges bei bereits innerhalb einer bestimmten Entfernung absehbaren Hindernissen, ein Einschalten bereits bei einem Verlassen des Vorgewendes oder eine Einstellung einer Streueinrichtung bei sich über ein bestimmtes Maß hinaus verändernden Geometrien des Geländes ausgeführt. Als Maß für die Geländeveränderung kann beispielsweise ein Gradientenvektor berechnet werden. Die Richtung des Gradientenvektors kann in Bezug auf die momentane oder auch vorhergesehene Fahrtrichtung beurteilt werden. Hier kann beispielsweise die Fahrtrichtung rechtzeitig so geändert werden, dass der Gradientenvektor nicht geschnitten wird, sondern dass das Abfahren parallel zum Gradientenvektor erfolgt, sodass die Gefahr des Umkippens durch ein optimierendes Anfahren minimiert wird.

Die online Warnung auf dem mobilen Fahrzeugcomputer kann insbesondere als eine Vorausschau ausgebildet sein, die mit Hinweisen auf evtl. bevorstehende Funktionen der Maschine verknüpft ist, um in der zur Verfügung stehenden Zeit Handlungen des Fahrzeugbedieners einzuleiten. So kann beispielsweise signalisiert werden, dass ein Mähwerkzeug aus der Arbeitsposition gehoben werden muss, obwohl das Hindernis erst in einer Entfernung von 10 Metern vorliegt, wobei hier die Trägheit des mechanischen Systems der Hebevorrichtung des Mähwerkzeuges mit einkalkuliert wird. Erfolgt auf diese Signalisierung innerhalb einer bestimmten Zeit keine Reaktion durch den Fahrzeugführer, so kann beispielsweise ein Zwangsstopp erfolgen, bei dem das Fahrzeug erst dann wieder neu gestartet werden kann, wenn das Mähwerkzeug von der Arbeitsposition abgehoben worden ist.

Beispielsweise kann eine vorausschauende Steuerung der Ausbringmenge bei Düngerstreuern so ausgeführt werden, dass eine Steuerung des Streuwinkels in Abhängigkeit von der Hangneigung so erfolgt, dass zum Beispiel hangabwärts eine kürzere Streubreite und hangaufwärts eine weitere Streubreite mit dem Ziel eingestellt wird, dass eine exakte Einhaltung der Arbeitsbreite erreicht wird. Auch diese kann dem Fahrzeugführer signalisiert werden oder die Anpassung kann automatisiert an den Komponenten des Düngerstreuers selbst erfolgen.

Eine vorausschauende Steuerung der Gestängeführung kann beispielsweise bei Pflanzenschutz-Spritzen so erfolgen, dass dadurch ein Aufsetzen des Gestänges auf dem Boden oder Pflanzenbestand vermieden wird. Bei einer vorausschauenden Steuerung einer Schneidwerkführung von Mähdreschern und Häckslern werden die entsprechenden Funktionskomponenten so eingestellt und geführt, beispielsweise angehoben, dass Aufsetzer vermieden werden. In Verbindung damit wird eine vorausschauende Mähstrategie berechnet, wobei hierbei berücksichtigt wird, dass in jedem Fall ein Umkippen der Landmaschine vermieden werden muss.

Nachfolgend sollen einige der Verfahrensabläufe anhand von Ausführungsbeispielen und beispielhaften Anwendungen näher dargestellt werden.

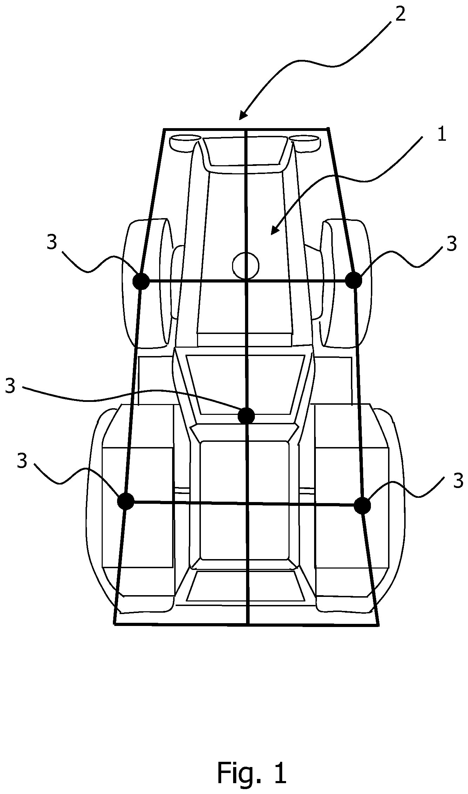

Fig. 1 zeigt ein beispielhaftes landwirtschaftliches Fahrzeug 1, in diesem Fall einen Traktor oder eine vergleichbare Zugmaschine und ein dem Fahrzeug zugeordnetes Fahrzeugmodell 2. Das landwirtschaftliche Fahrzeug ist hier in einer gegenständlichen Darstellung gezeigt, das Fahrzeugmodell 2 ist ein aus Fahrzeugdaten errechnetes Datenmodell des Fahrzeuges, das alle die wichtigen und relevanten Fahrzeugparameter enthält, um das reale Fahrzeug auf ein virtuelles 3-dimensionales Geländemodell abbilden zu können. Sowohl das Datenmodell des Fahrzeuges als auch das 3-dimensionale Geländemodell sind nicht nur aktuell, sondern wesentlich prädiktiv angelegt. Sie geben nicht nur einen momentanen oder aktuellen Zustand wieder, sondern einen vorgebbaren Zeitraum extrapolierten zukünftigen Zustand. Dadurch können zukünftige Situationen vorweggenommen und einer Planung erschlossen werden.

Zum Erstellen des Fahrzeugmodells 2 werden durch eine im Fahrzeug angeordnete Sensoreinrichtung 3, die in der Regel aus mehreren Einzelsensoren besteht, die relevanten Fahrzeugdaten ermittelt und an eine zentrale Datenbank übergeben. Diese relevanten Fahrzeugdaten bilden ein Fahrzeugprofil, das in der Datenbank gespeichert wird.

Die in dem Fahrzeugprofil zusammengefassten Fahrzeugdaten sind in dem hier vorliegenden Beispiel die Radabstände zwischen den Vorderrädern des Fahrzeugs, die Radabstände zwischen den Hinterrädern des Fahrzeugs, die Länge des Fahrzeugs, wobei hier insbesondere mögliche Auf- oder Anbauten berücksichtigt und mit erfasst werden, die Lage des Fahrzeugschwerpunktes, die in dem Fahrzeug vorhandene Kraftstoffmenge, der aktuelle Kilometerstand des Fahrzeuges, einzuhaltende Wartungsintervalle und dergleichen Parameter mehr, die in Betracht gezogen werden müssen, um die Funktionstüchtigkeit des Fahrzeugmodells unter bestimmten Einsatzbedingungen hinreichend simulieren zu können.

So werden beispielsweise die Radabstände und die erreichbaren Einschlagwinkel sowie die Fahrzeuglänge zur Berechnung von Wendekreisen und damit zum prädiktiven Vorausplanen möglicher Fahrwege, benötigt. Die Lage des Schwerpunktes des Fahrzeuges ist notwendig, um in Verbindung mit der Fahrzeugkontur ein mögliches Kippverhalten prädiktiv voraus zu bestimmen. Da die Lage des Schwerpunktes eine dynamische Größe ist und sich in Abhängigkeit von der Ladung, der Kraftstoffbefüllung und somit allgemein von der zeitlich veränderlichen Massenverteilung abhängt, ist es zweckmäßig, die Lage des Schwerpunktes durch eine Funktion in Abhängigkeit der hier erwähnten Größen anzugeben und somit nicht starr vorzugeben. Die Lage des Schwerpunktes wird dadurch selbst zur prädiktiven vorherbestimmten Größe.

Der momentane Kraftstoffvorrat innerhalb des Fahrzeuges wird beispielsweise dazu benutzt, um einen Aktionsradius des Fahrzeugmodells im 3-dimensionalen Geländemodell unter Berücksichtigung von Steigungen, Gefällen, schweren oder leichten Bodenbedingungen und dergleichen Randbedingungen bestimmen zu können. Die Daten über den aktuellen Kilometerstand des Fahrzeuges und die für das reale Fahrzeug ausgeführten Wartungsintervalle und Reparaturen berücksichtigen für das Fahrzeugmodell gewisse Alterungserscheinungen bzw. erlauben ein prädiktives Berücksichtigen eines möglichen Einsatzrisikos und damit nicht vorhersehbarer Vorfälle im Einsatz, die ebenfalls in die Vorausplanung von Fahr- und Einsatzwege einfließen können. Das Fahrzeugmodell ist somit grundsätzlich prädiktiv ausgelegt und nimmt zukünftige Betriebszustände des realen Fahrzeuges modellhaft vorweg.

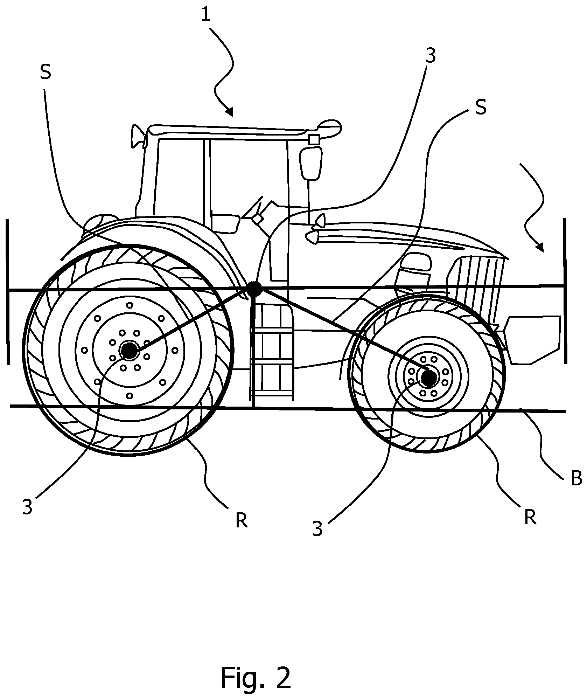

Das Fahrzeugmodell 2 ist wie das reale Fahrzeug auch, dreidimensional angelegt. Fig. 2 zeigt beispielhaft eine Seitenansicht des Fahrzeuges 1 aus Fig. 1, hier also des Traktors oder der Zugmaschine, und eine dieser Seitenansicht zugeordnete Seitenansicht des Fahrzeugmodells 2. Zu erkennen ist hier, dass in dem Fahrzeugmodell weitere Parameter des Fahrzeuges mit berücksichtigt sein können, so insbesondere die die Radien R der Fahrzeugräder, die hier jeweils für die Vorder- und Hinterräder verschieden sind. Ein hier gut zu erkennender Bestandteil des Fahrzeugmodells sind virtuelle Schwenkarme S, mit denen die Federwege der Vorder- und Hinterachsen des Fahrzeuges mit berücksichtigt werden, sowie ein virtueller Fahrzeugboden B, der als Referenzbereich des Fahrzeugmodells in Bezug auf den Boden des virtuellen 3-dimensionalen Geländemodells dient und mit dem ein mögliches Aufsetzen des Fahrzeuges definiert werden kann. Damit lassen sich in einfacher Weise grundlegende dynamische Eigenschaften des realen Fahrzeugs modellhaft nachbilden.

Es ist klar, dass die Datenbank nicht nur ein Fahrzeugmodell beinhaltet, sondern eine Vielzahl von Fahrzeugmodellen eines gesamten zur Verfügung stehenden Fuhrparks beinhalten kann, an dessen einzelnen Fahrzeugtypen eine fortlaufende telemetrische Erfassung des aktuellen Betriebszustandes mit entsprechenden Sensoreinrichtungen ausgeführt wird.

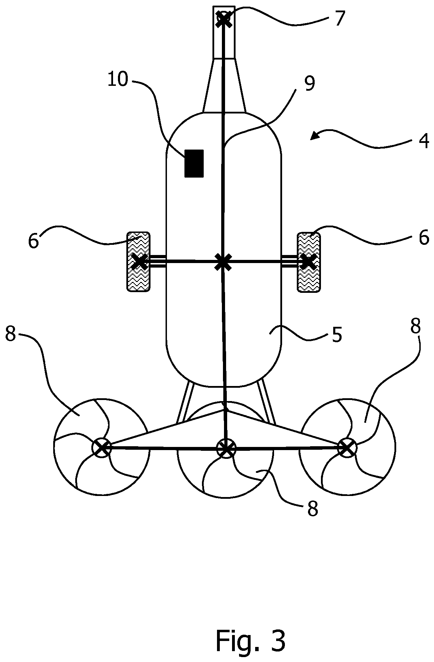

Dem Fahrzeugmodell entspricht in Hinblick auf einen landwirtschaftlichen Maschinenpark und dessen einzelnen landwirtschaftlichen Maschinen und Vorrichtungen ein sogenanntes Maschinenmodell. Fig. 3 zeigt hierzu ein entsprechendes Beispiel. Die Figur zeigt eine Streuvorrichtung 4 zum Ausbringen von Düngemittel, Pflanzenschutzmitteln oder auch streufähigem Saatgut. Die Rieselvorrichtung enthält einen Vorratsbehälter 5, ein aus zwei Rädern bestehendes Fahrwerk 6, einen Ausleger mit Anhängerkupplung eines bestimmten Typs 7 und als funktionelle Komponente eine Anordnung aus einzelnen Verteilvorrichtungen 8, die hier beispielhaft als Rotierteller ausgebildet sind. Über hier nicht gezeigte Zuführleitungen wird das in dem Vorratsbehälter befindliche fließ- oder streufähige Gut auf die Rotierteller geleitet. Dabei kann einerseits die Zufuhrrate durch Steuerungseinrichtungen, insbesondere entsprechende Steuerventile, reguliert werden und andererseits können die Rotierteller über entsprechend regulierbare Motoren auch mit variierbaren Drehzahlen betrieben werden, wodurch sich die Streuweite jeder einzelnen Verteilvorrichtung einstellen und anpassen lässt.

Der Rieselvorrichtung ist ein Maschinenmodell 9 zugeordnet. Wie bei dem Fahrzeugmodell 2 enthält das Maschinenmodell 9 Daten zu den geometrischen Abmessungen der Streuvorrichtung, insbesondere zu den Abständen der Räder 6, zur Gesamtlänge der Streuvorrichtung von dem Ausleger mit der Anhängerkupplung 7 bis zu den Verteilvorrichtungen 8 und zu den geometrischen Abmessungen der Verteilvorrichtung 8 selbst, d.h. hier insbesondere zum Abstand und zur Anzahl der einzelnen Rotierteller.

Das Maschinenmodell 9 enthält weiterhin funktionelle Maschinen- und Gerätedaten. So kann insbesondere der realen Anhängerkupplung 7 ein Datensatz mit Kompatibilitätsinformationen zugeordnet sein, aus dem hervorgeht, zu welchem Fahrzeug die Streuvorrichtung überhaupt passfähig ist und mit welchem Fahrzeug die Streuvorrichtung nicht kombiniert werden kann. Dem Vorratsbehälter 5 der Rieselvorrichtung ist ein Füllstandssensor 10 zugeordnet, über den der Füllstand im Vorratsbehälter als fortlaufend aktualisierte Information in das Maschinenmodell der Streuvorrichtung übertragen wird. Die Angaben über die Abstände der Räder 6 geben im Maschinenmodell 9 einen Aufschluss darüber, welche minimalen Radien mit der Streuvorrichtung gefahren werden können, d.h. welche Parameter bei der Planung des Fahrweges in diesem Fall zu berücksichtigen sind.

Dem Maschinenmodell sind auch Daten zugeordnet, aus denen sich eine Beziehung zwischen den Stellungen der Steuerventile und den Zufuhrraten des streu- und rieselfähigen Guts ergibt. Eine solche Zuordnung kann als Wertetabelle oder auch als eine vorher ermittelte Funktion vorliegen.

Das Maschinenmodell enthält ebenso Angaben, beispielsweise eine Funktion oder eine Wertetabelle, darüber, welche Drehzahl am jeweiligen Rotierteller vorliegen muss, damit eine bestimmte Streuweite durch die Verteilvorrichtung erreicht werden kann. Aus der Zufuhrrate des Streugutes und der Streuweite lässt sich dann die Menge des gestreuten Guts je Flächeneinheit, d.h. die Streudichte, theoretisch bestimmen. Das bedeutet, dass das Maschinenmodell auf eine prädiktive Aussage hin ausgelegt ist, aus der im Voraus abgeschätzt werden kann, wie lange der Vorrat an streufähigem Gut im Vorratsbehälter reichen wird, wenn die Rieselvorrichtung mit einer bestimmten Geschwindigkeit, einer bestimmten Streuweite und einer bestimmten Zufuhrrate betrieben wird. Das Maschinenmodell enthält darüber hinaus auch Angaben darüber, welcher einzelne Rotierteller mit welcher Drehzahl betrieben werden muss, um eine bestimmte Streuweite zu erreichen und es enthält prädiktiv verwertbare Informationen darüber, welche Streudichte bei einer bestimmten Drehzahl der Rotierteller, einer bestimmten Zufuhrrate des Streugutes und einer bestimmten Fahrgeschwindigkeit vorliegt.

Das bedeutet, dass das Maschinenmodell Informationen darüber enthält, welche Betriebs- und Steuerparameter in welcher Weise gestellt werden müssen, um die Rieselvorrichtung unter Berücksichtigung eines bestimmten Fahrwegs optimal zu betreiben. Es versteht sich, dass das Maschinenmodell bei anderen Vorrichtungen zur Bodenbearbeitung, beispielsweise Pflanzmaschinen, Pflugeinrichtungen, Eggen, Mähmaschinen, Häckslern und dergleichen Maschinen mehr in einer ganz anderen Weise mit anderen Parametern ausgebildet sein wird, wobei der Fachmann hier entsprechende Anpassungen vornehmen wird.

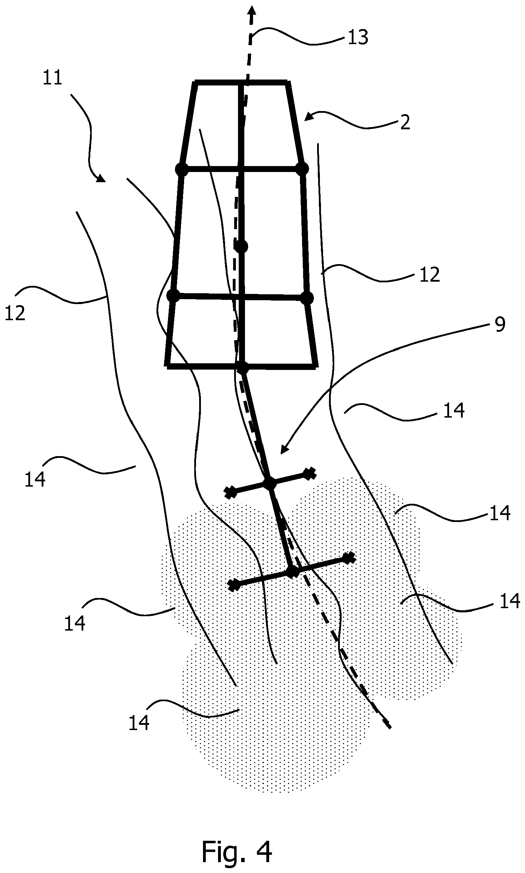

Fig. 4 verdeutlicht das Abbilden des Fahrzeugmodells 2 und des Maschinenmodells 9 in ein vorgegebenes 3-dimensionales Geländemodell 11. Das Fahrzeugmodell 2 und das Maschinenmodell 9 sind hier miteinander kombiniert. Die durch das Maschinenmodell 9 repräsentierte Streuvorrichtung ist somit gewissermaßen virtuell an den durch das Fahrzeugmodell repräsentierten Traktor bzw. die Zugmaschine angekoppelt. Bei einem Fuhrpark, der sich durch mehrere unterschiedliche Fahrzeugmodelle und Maschinenmodelle repräsentiert, können somit beliebige Kombinationen virtuell zusammengefügt und in das gegebene 3-dimensionale Geländemodell eingefügt werden. In einem solchen Fall werden die Bewegungseigenschaften, die Geländegängigkeit und die Beweglichkeit des Gesamtverbandes aus Traktor und Streuvorrichtung durch das Modell: "Fahrzeugmodell und Maschinenmodell" repräsentiert.

Das 3-dimensionale Geländemodell ist zunächst eine Abbildung einer georeferenzierten 3-dimensionalen Topographie. Neben Flächendaten, die, insbesondere über geographische Positionsangaben, eindeutig Orten im realen Gelände zugeordnet sind, ist jedem Ort auch eine Höhenangabe zugeordnet. In dem hier vorliegenden Beispiel sind die Höhendaten durch eine Reihe von Höhenlinien 12 angedeutet. Hauptziel des hier vorliegenden Verfahrens ist das Ermitteln eines optimalen Fahrwegs, der hier als ein Fahrweg 13 versinnbildlicht ist. Der Fahrweg ist insbesondere dann optimal, wenn das kombinierte Fahrzeug- und Maschinenmodell 2 und 9 in der prädiktiven Vorausschau eine optimale Bodenbearbeitung erbracht hat. Hierzu wird insbesondere unter Berücksichtigung des 3-dimensionalen Geländemodells ermittelt, welchen Effekt eine Bodenbearbeitung entlang eines angenommenen Fahrweges voraussichtlich erbringen würde.

In dem hier vorliegenden Fall, bei dem das Maschinenmodell 9 eine Streuvorrichtung repräsentiert, ist die Einhaltung einer möglichst einheitlichen Streudichte über einen möglichst breiten Bearbeitungsstreifen hinweg wünschenswert. Unter Berücksichtigung des Höhenprofils und der daraus sich ergebenden Bodensteigung kann für einen gegebenen Satz von Maschinenparametern am Maschinenmodell 9 berechnet werden, welche Streubreite mit welcher Streudichte dabei für das Streugut erreicht wird. In dem hier vorliegenden Beispiel ist dies in Form von Streubereichen 14 verdeutlicht, die angeben, bis zu welchem Bereich eine gegebene Streudichte realisiert werden kann.

Auch in diesem Fall hängt die Art des zu optimierenden Parameters natürlich von dem jeweils gewählten Maschinenmodell ab. So kann beispielsweise bei dem Maschinenmodell einer Pflugvorrichtung die Eindringtiefe in den Boden der zu optimierende Parameter sein, der entsprechend der Topographie des 3-dimensionalen Geländemodells bestimmt und optimiert werden muss.

Ein weiterer sehr wichtiger Aspekt bei dem Abbilden des Fahrzeug- und/oder Maschinenmodells auf das 3-dimensionale Geländemodell ist das prädiktive Vorhersagen möglicher Unfallquellen, wie zum Beispiel ein mögliches Aufsitzen eines Fahrzeuges auf dem Gelände, oder ein mögliches Kippen des Fahrzeugs an Hanglagen oder bei einem einseitigen Anheben des Fahrzeuges und das hierdurch mögliche Vermeiden eines tatsächlichen Unfalls im realen Gelände.

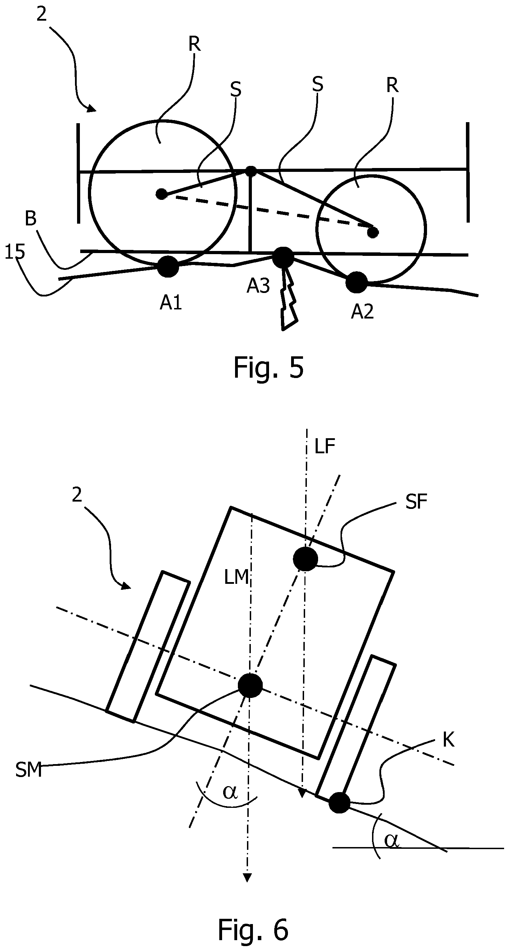

Fig. 5 zeigt hierzu ein beispielhaftes prädiktives Ermitteln eines möglichen Aufsetzens eines Fahrzeugs. Bei dem hier gegebenen Beispiel wird das Fahrzeugmodell 2 in einen Abschnitt des 3-dimensionalen Geländemodells 11 eingefügt. Bei dem hier vorliegenden Beispiel erweist sich die in Fig. 2 gezeigte Seitenansicht des Fahrzeugmodells 2 als nützlich, um die grundlegenden Verfahrensabläufe zum Prüfen eines Aufsetzens darzustellen.

Das 3-dimensionale Geländemodell 11 weist ein virtuelles aus den Geodaten bestimmtes Bodenprofil 15 auf. Bei dem Fahrzeugmodell 2 sind die für das prädiktive Vorhersagen eines möglichen Aufsetzens in dem hier vorliegenden Beispiel die Radien R der Fahrzeugräder sowie die durch die Federwegen und Radaufhängungen der Räder geometrisch festgelegten Schwenkarme S von Bedeutung. Ein virtueller Fahrzeugboden B definiert ein rechnerisches Kriterium dafür, wann ein Aufsetzen des Fahrzeugmodells 2 tatsächlich als gegeben angesehen werden muss. Wie aus der Prinzipdarstellung aus Fig. 5 hervorgeht, wird das Fahrzeugmodell 2 über das Bodenprofil 15 virtuell bewegt, wobei zum einen Aufsetzpunkte A1 und A2 der beiden Räder des Fahrzeugmodells auf dem Bodenprofil ermittelt werden und zum anderen das Bodenprofil zwischen den Aufsetzpunkten A1 und A2 analysiert wird. Schneidet das Bodenprofil dabei die Linie des virtuellen Fahrzeugbodens B in mindestens einem dritten Aufsetzpunkt A3, der zwischen den Punkten A1 und A2 liegt, so ist hierdurch ein Aufsetzen des Fahrzeuges prädiktiv bestimmt. Das bedeutet, dass beim Durchfahren des realen Geländes mit einem realen Fahrzeug, das durch das Fahrzeugmodell repräsentiert wird, ein Aufsetzen des Fahrzeuges sehr wahrscheinlich ist, sodass das reale Gelände mit dem betreffenden Fahrzeug nicht an dieser Stelle, zumindest nicht in der angegebenen Richtung, durchfahren, sondern gemieden werden sollte.

Die prädiktive Vorausplanung kann hier nun Strategien ermitteln, wie ein derartiges Aufsetzen verhindert werden kann, falls die problematische Stelle im Gelände doch durchfahren werden muss. Hierzu kann beispielsweise als Optimierungsoption vorgeschlagen werden, den Reifenluftdruck des realen Fahrzeuges etwas zu erhöhen, um im Ergebnis dessen den Fahrzeugboden ein wenig anzuheben.

Es kann weiterhin beispielsweise eine vorausschauende Steuerung einer Gestängeführung zur Vermeidung von Aufsetzern des Gestänges auf dem Boden oder Pflanzenbestand vorgenommen werden, indem das Gestänge angehoben wird. In gleicher Weise können Schneidwerkzeuge, beispielsweise bei Mähdreschern, Mähmaschinen oder Häckslern in ihrer Lage verändert werden.

Möglich ist es auch, dem virtuellen Bodenprofil des Geländemodells Attribute zuzuordnen, die auf eine momentane oder voraussichtliche Bodenbeschaffenheit Bezug nehmen und diese berücksichtigen. Hierzu können insbesondere Wetterprognosen in das Geländemodell mit eingefügt werden, um zu erwartende Bodenbeschaffenheiten prädiktiv zu simulieren. So könnte beispielsweise bei einem zu erwartenden regennassen und schlammigen Boden ein tieferes Einsinken der Räder durch ein entsprechendes Verschieben des Fahrzeugmodells berücksichtigt werden, wobei bei diesem Einsinken auch Daten der Fahrzeuggeometrie und Betriebsdaten, wie Reifenbreiten, Gesamtmasse oder Auflagedruck mit einfließen können. Hier wäre es möglich, als weitere Optimierungsstrategie ein Befahren zu einem späteren Zeitpunkt zu terminieren, wenn der Boden wieder trockener und damit fester ist. In einem solchen Fall können beispielsweise wetterabhängige Fahrwege ermittelt und optimiert werden. In Verbindung damit können entsprechende Einsatzpläne vom System ausgegeben werden.

Fig. 6 zeigt ein Beispiel für ein prädiktives Ermitteln einer Kipp- und/oder Rutschgefahr eines Fahrzeuges an einer Hanglage. In dem hier vorliegenden Beispiel wird ebenfalls auf das Fahrzeugmodell 2 gemäß der Figuren 1 und 2 zurückgegriffen. In dem hier vorliegenden Fall ist dieses Modell in einer Ansicht von hinten schematisch dargestellt. Für die Beurteilung einer Kippgefahr ist die Lage des Masseschwerpunktes SM und des Formschwerpunktes SF von Bedeutung. Das Fahrzeugmodell muss in einem solchen Fall Informationen über die Masseverteilung im realen Fahrzeug sowie über die Fahrzeugkontur enthalten, sodass beide Schwerpunkte bestimmt werden können. Zum Feststellen einer Kippanfälligkeit wird eine lokale Steigung, d.h. ein lokaler Steigungswinkel α, des 3-dimensionalen Geländemodells an dem Ort ermittelt, an dem das Fahrzeugmodell in das Geländemodell eingesetzt worden ist. Dann wird ein Lot LM mindestens durch den Masseschwerpunkt SM des Fahrzeugmodells gelegt und dessen Verlauf in Bezug auf einen Kipppunkt K bestimmt. Eine Kippgefahr liegt jedenfalls dann vor, wenn das Lot LM auf der hangabwärts gelegenen Seite des Kipppunktes K verläuft. Die Kippgefahr kann noch weiter analysiert werden, indem die Lage des Lotes in Bezug auf den Kipppunkt genauer berechnet und angegeben wird. Hierbei können verschiedene Instabilitätsgrade definiert werden.

Hierzu können auch noch weitere Parameter zur Beurteilung herangezogen werden, die insbesondere ein mögliches Einsinken der hangabwärts gelegenen Räder des Fahrzeugmodells in Betracht ziehen. Die Einsinktiefe lässt sich auch hier prädiktiv bestimmen, indem ein Wert für die Weichheit des Bodens direkt aus möglichen Niederschlagsmengen bestimmt und in die Berechnungen eingefügt wird. Sinken die Räder hangabwärts tiefer ein, so vergrößert dies den Steigungswinkel α, wobei die Kippgefahr zunimmt.

Zum Ermitteln einer Rutschgefahr wird ebenfalls der Steigungswinkel α gemäß dem 3-dimensionalen Geländemodell herangezogen. Um die Rutschgefahr prädiktiv zu ermitteln, wird der Haftreibungskoeffizient zwischen Fahrzeug und Geländegrund aus vorliegenden Wetterprognosen und einem damit zusammenhängenden Weichheits- oder Fließgrad des Bodens ermittelt.

Ausgehend hiervon können sowohl prädiktiv als auch bei einer möglichen Echtzeitbeeinflussung eine Reihe von entweder vorausgeplanten oder operativ ausgeführten Anpassungen vorgenommen werden. Hier kann beispielsweise in einem ersten Schritt eine automatische Reduzierung der Geschwindigkeit erfolgen, um dieses Umkippen zu vermeiden.

In gleicher Weise kann auch eine entsprechende Steuerung der Düngerausbringung in Abhängigkeit von der Hangneigung erfolgen. Dabei ist es insbesondere auch möglich, das Ausbringen des Düngers ab einer bestimmten Hangneigung zu stoppen, um, um ein Auswaschen des Düngers zu vermeiden.

Ebenso kann eine Steuerung der Schneidwerkführung von Mähdreschern und Häckslern erfolgen, sodass neben der Vermeidung von Aufsetzern auch eine vorausschauende Mähstrategie so berechnet wird, dass ein Umkippen vermieden wird.

Bei mehreren Fahrzeugen im Verbund, d.h. in einer Flotte, lassen sich durch eine auf den gesamten Verbund einwirkende Steuerung Kollisionen durch kollektive Reaktionen, wie zum Beispiel ein gegenseitiges Abbremsen bzw. Umplanen der Fahrroute vermeiden. Die Fahrzeuge pder landwirtschaftlichen Maschinen wirken somit nicht mehr als Einzelfahrzeuge, sondern als "soziale Fahrzeuge".

Letztlich können durch die Verfahrensschritte gemäß Fig. 5 und Fig. 6 lokale Gefahrensituationen beim Abfahren des durch das Geländemodell repräsentierten Geländes prädiktiv ermittelt und entsprechende Fahrtrouten ausselektiert werden.

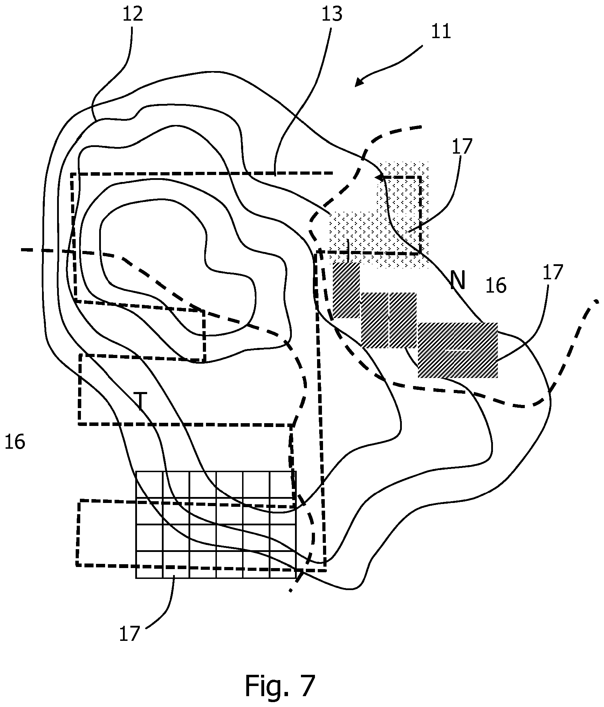

Fig. 7 zeigt ein beispielhaftes 3-dimensionales Geländemodell 11 in einer größeren Übersicht. Wie bereits dargestellt, enthält das Geländemodell Höheninformationen, die als Höhenlinien 12 verdeutlicht werden können.

Das Geländemodell ist prädiktiv angelegt. Es modelliert also einen zukünftigen Zustand eines realen Geländes, wobei ausgehend von einem aktuellen Zustand und Einbeziehung bestimmter Randdaten und Zusatzinformationen künftige Entwicklungen und Ereignisse im realen Gelände extrapoliert und in dem Geländemodell abgespeichert werden. In dem hier vorliegenden Beispiel sind zwei Gebiete 16 mit unterschiedlichen Bodenstrukturen in dem Geländemodell enthalten. Das erste Gebiet verdeutlicht einen nassen Bodenbereich N, das zweite Gebiet markiert einen trockenen Bodenbereich T. Wie bereits dargestellt, können diese Bereiche aus Wetterprognosen zukünftig ermittelt werden.

Dieses Geländemodell wird von dem Fahrzeug- und Maschinenmodell virtuell durchfahren, wobei Anfangs- und Endpunkt sowie die zu durchfahrende Fläche als Anfangswerte vorgegeben sein können. Dabei kommen eine Reihe von Kriterien zur Anwendung, um einen optimalen Fahrweg prädiktiv zu bestimmen, der voraussichtlich im realen Gelände am optimalsten durchfahren werden kann. Zum Bestimmen des optimalen Fahrwegs kann die Menge der Optimierungskriterien abgestuft sein. Das 3-dimensionale Geländemodell kann beispielsweise Teilflächen 17 enthalten, die mit einem definierten Befahrbarkeitsindex versehen werden können, d.h. die unter bestimmten Bedingungen nicht befahren werden können, die nur aus oder in bestimmten Richtungen befahren werden können oder die jederzeit befahren werden können. Diese Teilflächen werden hinreichend klein gewählt, um eine ausreichend gute Ortsauflösung im Geländemodell zu ermöglichen, aber auch hinreichend groß, um deren Gesamtzahl zu begrenzen und den Rechenaufwand in einem vertretbaren Rahmen zu halten.

Die Entscheidung darüber, ob eine bestimmte Teilfläche im Geländemodell befahren werden kann, unter welchen Randbedingungen dies erfolgen kann oder ob das Feld für jedes Befahren ausscheidet, richtet sich beispielsweise danach, welches Fahrzeugmodell und/oder welches Maschinenmodell gewählt wird. So können insbesondere bestimmte Felder für bestimmte Fahrzeugmodelle von vorherein dadurch als unbefahrbar markiert werden, weil dort ein Aufsetzen und oder ein Kippen des Fahrzeugmodells und/oder des Maschinenmodells mit Sicherheit angenommen werden muss. Diese Felder markieren insbesondere Abschnitte des Geländemodells, die sich durch ein großes Gefälle, durch eine große Welligkeit, tiefe Gräben usw. auszeichnen.

Andere Felder des Geländemodells werden dann als unbefahrbar markiert, wenn die Prüfung ergibt, dass die Bedingungen dort, beispielsweise infolge von Niederschlägen, nachteilig oder gefährlich werden, sodass ein Einsinken und damit ein Aufsetzen des Fahrzeugs, eine Rutschung oder ein Kippen droht. Hier können auch empfohlene bzw. auch vorgeschriebene Einfahr- und Ausfahrrichtungen für jedes einzelne Feld angegeben werden.

Die Fahrwegoptimierung besteht nun darin, einen Fahrweg zu errechnen, der zum einen die Randbedingungen in jedem einzelnen Feld des Geländemodells berücksichtigt und bei dem andererseits ein minimaler Verbrauch von Kraftstoff und Betriebsmitteln bei einer möglichst hohen Effektivität der Bodenbearbeitung realisiert werden kann. Das dreidimensionale Geländemodell ist somit letztlich ein prädiktiv veränderliches 3-dimensionales Geländemodell mit einem erlaubten Richtungsfeld, über dem Fahrwegoptimierungen in Abhängigkeit von bestimmten Fahrzeug- und Maschinenmodellen und deren ebenfalls prädiktiv determinierten Eigenschaften ausgeführt werden.

Das Ergebnis ist der Fahrweg 13, der als eine Folge von Navigationsbefehlen und Richtungsänderungen angegeben wird und somit in eine Reihe von Steuerungsbefehlen für einen Bordcomputer innerhalb des realen Fahrzeuges im Fuhrpark umgesetzt werden kann.

Diese Steuerungsbefehle werden beispielsweise direkt in einen Bordcomputer des realen Fahrzeugs bzw. einen Steuercomputer einer landwirtschaftlichen Maschine übertragen. Die auf das 3-dimensionale prädiktive Geländemodell bezogenen Fahrwegdaten werden nun zu vorbestimmten Navigationsdaten für den realen Fahrweg im realen Gelände. Diese Navigationsdaten können direkt zur autonomen Steuerung des Fahrzeuges im Sinne einer Autopilotsteuerung verwendet werden, wobei dabei gleichzeitig die gezogene landwirtschaftliche Maschine mit entsprechenden Steuerbefehlen versorgt wird sodass an topographisch definierten Geländepunkten beispielsweise die Steuerung der Verteilvorrichtung so erfolgt, dass eine gleichbleibende Streudichte erreicht wird.

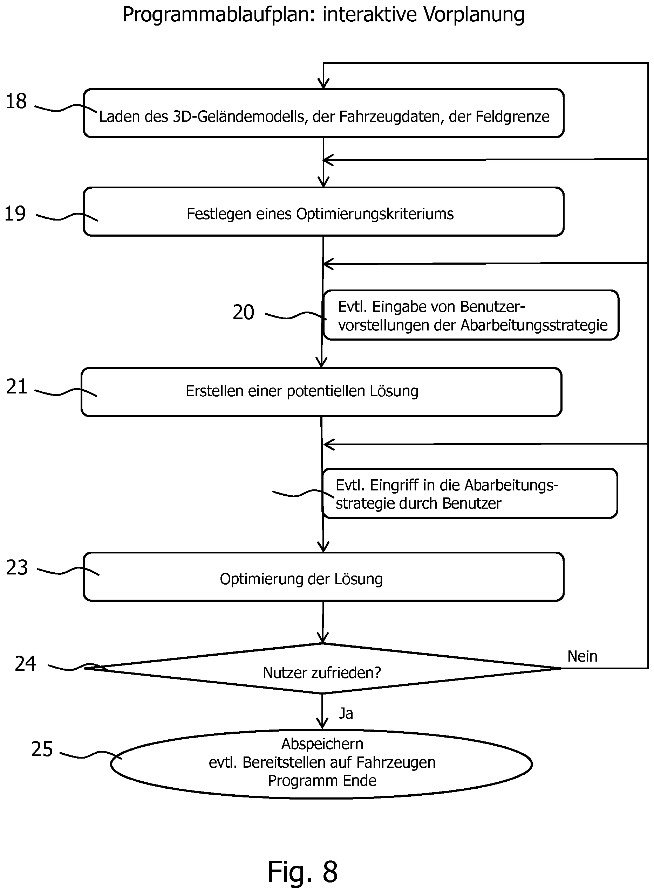

Fig. 8 zeigt einen beispielhaften Programmablaufplan für eine interaktive Vorplanung. Diese Vorplanung baut auf dem vorab erstellten Geländemodell sowie die Fahrzeug- und Maschinenmodellen auf und kann beispielsweise wie folgt ablaufen:
Es erfolgt zu Beginn in einem Schritt 18 ein Laden des 3D-Geländemodells, der Daten des Fahrzeugmodells und/oder des Maschinenmodells in eine Datenverarbeitungseinrichtung, beispielsweise einen stationären Computer oder einen mobilen Steuercomputer innerhalb des Fahrzeuges. Darüber hinaus kann es notwendig sein, eine Feldgrenze festzulegen, d.h. einen Bereich innerhalb des Geländemodells, der mindestens lückenlos abzufahren, also zu bearbeiten ist.

Ausgehend davon wird in einem Schritt 19 mindestens ein Optimierungskriterium festgelegt, auf das hin der mögliche Fahrweg zu optimieren ist. Dies können beispielsweise eine minimierte Fahrtzeit, ein minimierter Einsatz von Betriebsstoffen, eine mit vorhandenen Mitteln maximierte Bearbeitungsfläche oder dergleichen Kriterien sein. Hierzu kann der Benutzer in einem Eingabeschritt 20 Randbedingungen und so genannte Abarbeitungsstrategien vorgeben, d.h. Informationen darüber, auf welche Art das Optimierungskriterium erfüllt werden soll. So kann beispielsweise festgelegt werden, dass der Fahrweg zu minimieren ist, aber unter der Nebenbedingung, dass starke Gefällestrecken im Geländemodell gemieden werden sollen.

In einem Schritt 21 wird nun eine mögliche Lösung ermittelt. Diese bildet einen Ausgangspunkt für einen Schritt 22, in welchem der Nutzer in diesen Rohentwurf der Abarbeitungsstrategie eingreifen und die Lösung modifizieren kann. Das Ergebnis ist eine Optimierte Lösung 23. Diese kann in einem Schritt 25 abgespeichert werden und/oder mobilen Fahrzeugsteuercomputern übermittelt werden. Optional kann in einem Schritt 24 auch diese Lösung wieder als Ausgangspunkt für einen tiefergehenden Optimierungszyklus dienen, die bei jedem der Schritte 18 bis 22 einsetzen kann.

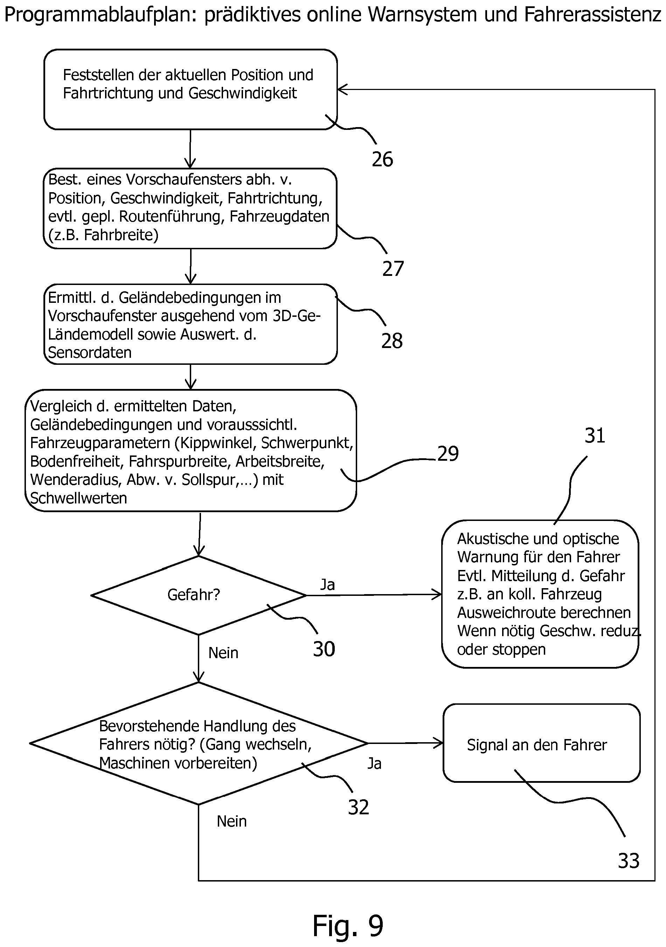

Fig. 9 zeigt einen beispielhaften Programmablaufplan für ein prädiktives online Warnsystem und eine Fahrerassistenz. Dieses Warnsystem ist prädiktiv angelegt, d.h. es kann insbesondere dann bereits eine gefährliche Situation ermitteln, wenn das Gelände noch nicht befahren wird. Allerdings ist es natürlich auch möglich, eine Echtzeitsteuerung zu realisieren, wenn das Fahrzeug aktuell in eine gefahrvolle Situation gerät.

Zu Beginn wird in einem Schritt 26 eine aktuelle Position des Fahrzeuges und/oder die aktuelle Fahrtrichtung und Geschwindigkeit ermittelt. Ausgehend davon wird ein prädiktives Vorschaufenster in einem Schritt 27 erstellt, das alle absehbaren Situationen vorausschauend erfasst. Dieses Vorschaufenster wird in Abhängigkeit von Position, Geschwindigkeit, Fahrtrichtung, eventuell geplanter Routenführung, und Fahrzeugdaten, beispielsweise der Fahrtbreite, erstellt.

Innerhalb des Vorschaufensters werden in einem Schritt 28 die Geländebedingungen ermittelt. Hierbei wird von den Daten des Geländemodells, Sensordaten oder auch voraussichtlichen Fahrwegdaten ausgegangen.

In einem Schritt 29 werden die ermittelten Daten, Geländebedingungen und voraussichtliche Fahrzeugparameter, beispielsweise der Kippwinkel, der Schwerpunkt, die aktuelle Bodenfreiheit, die Fahrspurbreite, die Arbeitsbreite, der Wenderadius, mögliche Abweichungen von der Sollspur, mit Sollwerten verglichen.

In diesem Vergleichsschritt 30 wird entschieden, ob eine Gefährdung vorliegt. Ist dies der Fall erfolgt in einem Schritt 31 eine akustische und/oder optische Warnung für den Fahrer, eventuell verbunden mit einer Mitteilung über die bestehende Gefahr in Form einer Sprachausgabe. In Verbindung damit kann eine Ausweichroute berechnet werden und/oder falls notwendig die Geschwindigkeit reduziert werden. Der Ablauf kehrt dann zum Schritt 26 zurück.

Aber auch dann, wenn keine unmittelbare Gefahr besteht, können Handlungen des Fahrers notwendig sein. Der Programmablauf kann hierzu auch bereits Gefahren prädiktiv abschätzen, indem das Vorschaufenster entsprechend groß gewählt wird. Tritt dabei innerhalb des Vorschaufensters eine absehbare Gefährdung ein, so wird in einem Schritt 32 entschieden, ob ein Eingreifen notwendig sein könnte oder nicht. Falls dies der Fall ist, erfolgt eine Signalausgabe an den Fahrer und der Ablauf wird zur Schritt 26 zurückgeführt. Ist dies nicht der Fall, erfolgt ebenfalls eine Rückkehr zu Schritt 26.

Das Verfahren wurde anhand von Ausführungsbeispielen erläutert. Im Rahmen fachmännischen Handelns sind weitere Ausgestaltungen denkbar. Weitere Ausführungsbeispiele ergeben sich außerdem durch die Unteransprüche.

### Bezugszeichenliste

- 1: landwirtschaftliches Fahrzeug
- 2: Fahrzeugmodell
- 3: Sensoreinrichtung
- 4: Streuvorrichtung
- 5: Vorratsbehälter
- 6: Fahrwerk
- 7: Ausleger mit Anhängekupplung
- 8: Verteilvorrichtung
- 9: Maschinenmodell
- 10: Füllstandssensor
- 11: 3-dimensionales Geländemodell
- 12: Höhenlinie
- 13: Fahrweg
- 14: Streubereich
- 15: Bodenprofil
- 16: Gebiete mit unterschiedlicher Bodenstruktur
- 17: Feld mit Befahrbarkeitsindex
- 18: Laden des 3D-Geländemodells
- 19: Festlegen des Optimierungskriteriums
- 20: Vorgabe Randbedingungen und Abarbeitungsstrategien
- 21: Lösungsermittlung
- 22: Lösungsmodifikation durch Nutzer
- 23: Optimierte Lösung
- 24: tiefergehender Optimierungszyklus
- 25: Speichern/Übermitteln der Lösung
- 26: Ermittlung aktuelle Fahrzeug/Maschinenposition
- 27: Erstellen prädiktives Vorschaufenster
- 28: Ermitteln Geländebedingungen
- 29: Sollwertvergleich
- 30: Gefährdungsentscheidung
- 31: Ausgabe akustische/optische Warnung
- 32: Entscheidung über notwendiges Eingreifen
- A1: erster Aufsetzpunkt
- A2: zweiter Aufsetzpunkt
- A3: dritter Aufsetzpunkt
- B: Fahrzeugboden, virtuell
- K: Kipppunkt
- LM: Lot durch Masseschwerpunkt
- N: nasser Bodenbereich
- R: Rad mit definiertem Radius
- S: Schwenkarm, virtuell
- SF: Formschwerpunkt
- SM: Masseschwerpunkt
- T: trockener Bodenbereich
- α: Lokaler Steigungswinkel

## Patentansprüche

1. Verfahren zum prädiktiven Erzeugen von Daten zur Steuerung eines Fahrweges und eines Betriebsablaufes für ein landwirtschaftliches Fahrzeug (1) und eine landwirtschaftliche Maschine (4),
mit folgenden Verfahrensschritten
- Automatisches Erfassen und Speichern von Fahrzeug- und/oder Maschinendaten über eine an Einzelfahrzeugen und/oder Einzelmaschinen angeordnete Sensoreinrichtung (3) und Erzeugen eines Fahrzeug- und Maschinenmodells (2, 9),
- Sammeln und Speichern von Daten aus einer vorab generierten Geodatenmenge über eine dreidimensionale Geländetopographie aus einem Georeferenzierungs- und Kartierungssystem und von Daten über eine aktuelle und prognostizierte Bodenbeschaffenheit über eine Vielzahl von im realen Gelände verteilte automatische Messstationen und Zuordnen zu der Geodatenmenge und/oder Sammeln und Speichern von Daten über eine Witterungsbedingung und Erzeugen eines prädiktiven dreidimensionalen georeferenzierten Geländemodells (11)
- Optimierendes Abbilden des Fahrzeug- und Maschinenmodells (2, 9) auf das dreidimensionale prädiktive georeferenzierte Geländemodell (11) und Errechnen von Fahrwegsteuerdaten zum Festlegen eines Fahrweges und/oder Maschinensteuerdaten zur Steuerung von Maschinenkomponenten,
wobei
das prädiktive Geländemodell von dem Fahrzeug- und Maschinenmodell virtuell durchfahren wird und
bei dem optimierenden Abbilden des Fahrzeug- und Maschinenmodells (2, 9) auf das dreidimensionale prädiktive georeferenzierte Geländemodell ein erster Optimierungsalgorithmus ausgeführt wird, bei dem ein optimaler Fahrweg unter Berücksichtigung einer aktuellen und/oder vorhersehbaren Bodenbeschaffenheit des Geländes und der Vermeidung von für das Fahrzeug- und Maschinenmodell gefährlichen Rutsch-, Hang- und/oder Kipplagen berechnet wird, wobei bei einem zweiten Optimierungsalgorithmus ein auf den Fahrweg angepasster optimierter Betriebszustand der landwirtschaftlichen Maschine errechnet wird, wobei bei einer Fahrwegoptimierung Randbedingungen in jedem einzelnen Feld des Geländemodells berücksichtigt werden und bei dem
ein minimaler Verbrauch an Kraftstoff und Betriebsmitteln bei einer möglichst hohen Effektivität der Bodenbearbeitung realisiert werden kann und die Daten des optimalen Fahrwegs und die Daten des optimierten Betriebszustandes in die Fahrweg- und die Maschinensteuerdaten überführt werden,
- Ausgeben und Übermitteln der Fahrwegsteuerdaten und/oder der Maschinensteuerdaten an eine Steuereinheit des landwirtschaftlichen Fahrzeuges (1) und/oder der landwirtschaftlichen Maschine (4).

2. Verfahren nach Anspruch 1,
**dadurch gekennzeichnet, dass**
bei dem automatischen Erfassen der Fahrzeugdaten Daten über eine Fahrzeuggeometrie und über den aktuellen und/oder vorhersehbaren Betriebszustand des landwirtschaftlichen Fahrzeuges telemetrisch von einem Bordsystem fortlaufend erfasst und/oder extrapoliert und an eine zentrale Datenbank übermittelt werden.

3. Verfahren nach Anspruch 1,
**dadurch gekennzeichnet, dass**
bei dem automatischen Erfassen der Maschinendaten Daten über eine Maschinengeometrie und einen aktuellen und/oder vorhersehbaren Betriebszustand landwirtschaftlicher Bearbeitungskomponenten fortlaufend telemetrisch erfasst und an eine zentrale Datenbank übermittelt werden.

4. Verfahren nach einem der vorhergehenden Ansprüche,
**dadurch gekennzeichnet, dass**
bei dem Erzeugen des Fahrzeug- und Maschinenmodells (2, 9) die automatisch erfassten Fahrzeugdaten und die automatisch erfassten Maschinendaten kombiniert werden, wobei eine Vielzahl unterschiedlicher Fahrzeugtypen mit einer Vielzahl unterschiedlicher Maschinentypen kombiniert werden können.

5. Verfahren nach Anspruch 1,
**dadurch gekennzeichnet, dass**
das Sammeln der Daten über die dreidimensionale Geländetopographie über ein Auswerten einer vorab generierten Geodatenmenge erfolgt.

6. Verfahren nach Anspruch 5,
**dadurch gekennzeichnet, dass**
bei dem Sammeln von Daten über die aktuelle und/oder prognostizierte Geländebeschaffenheit die Daten einer Vielzahl im realen Gelände verteilter automatischer Messstationen, insbesondere von Messstationen über eine Bodenfeuchte und/oder einer gefallenen Niederschlagsmenge, erfasst und der Geodatenmenge zugeordnet werden.

7. Verfahren nach Anspruch 1,
**dadurch gekennzeichnet, dass**
der erste und/oder der zweite Optimierungsalgorithmus durch das Vorgeben veränderbarer Randbedingungen und/oder Gewichtungen nutzerspezifisch anpassbar und beeinflussbar sind.

8. Verfahren nach einem der vorhergehenden Ansprüche,
**dadurch gekennzeichnet, dass**
das Verfahren in einem offline-Modus betreibbar ist, wobei die Verfahrensschritte auf einem nicht mit dem Fahrzeug und/oder der landwirtschaftlichen Maschine verbundenen externen datenverarbeitenden System, insbesondere einem PC, einem Tablet-Computer und/oder einem Cloudcomputersystem, ausgeführt werden.

9. Verfahren nach einem der Ansprüche 1 bis 7,
**dadurch gekennzeichnet, dass**
das Verfahren in einem online-Modus betreibbar ist, wobei die Verfahrensschritte auf einer in dem Fahrzeug- und/oder der landwirtschaftlichen Maschine integrierten Steuerungseinheit, insbesondere einem Fahrzeugcomputer, ausgeführt werden.

10. Verfahren nach einem der vorhergehenden Ansprüche,
**dadurch gekennzeichnet, dass**
das prädiktive Erzeugen der Daten durch ein Erfassen mit einem Erfassen von operativen Echtzeitdaten ergänzt ist, wobei durch die operativen Echtzeitdaten ein momentaner Ist-Zustand des Fahrzeuges und/oder der Landwirtschaftlichen Maschine und/oder von Geländebeschaffenheiten erfasst wird, wobei die operativen Echtzeitdaten durch die Steuereinheit des Fahrzeuges und/oder der landwirtschaftlichen Maschine aktualisierend den prädiktiv ermittelten Fahrwegsteuerdaten hinzugefügt werden.

11. Verfahren nach einem der vorhergehenden Ansprüche,
**dadurch gekennzeichnet, dass**
die Fahrwegsteuerdaten und/oder die Maschinensteuerdaten an eine Steuereinheit für ein autonomes und führerlos arbeitendes landwirtschaftliches Fahrzeug oder Fahrzeugflotte und/oder eine Steuereinheit für eine autonome und führerlos arbeitende landwirtschaftliche Maschine oder Maschinenflotte übertragen werden.

## Claims

1. Method for the predictive generation of data for the control of a driving route and an operating sequence for an agricultural vehicle (1) and an vehicle (1) and an agricultural machine (4),
with the following method steps
- Automatic acquisition and storage of vehicle and/or machine data via a sensor device (3) arranged on individual vehicles and/or individual machines and generation of a vehicle and machine model (2, 9),
- collecting and storing data from a previously generated set of geodata on a three-dimensional terrain topography from a georeferencing and mapping system and data on a current and predicted ground condition via a plurality of automatic measuring stations distributed across the real terrain and assigning to the geodata set and/or collecting and storing data on a weather condition and generating a predictive three-dimensional georeferenced terrain model (11)
- Optimizing mapping of the vehicle and machine model (2, 9) onto the three-dimensional predictive georeferenced terrain model (11) and calculating route control data for defining a route and/or machine control data for controlling machine components,
wherein
the predictive terrain model is virtually traversed by the vehicle and machine model is virtually driven through and during the optimizing mapping of the vehicle and machine model (2, 9) to the three-dimensional predictive georeferenced terrain model, a first optimization algorithm is executed in which an in which an optimum route is calculated taking into account a current and/or predictable ground condition of the terrain and the avoidance of slippery, sloping and/or tilted positions which are dangerous for the vehicle and machine model, wherein in a second optimization algorithm, an optimized operating state of the agricultural optimized operating state of the agricultural machine is calculated, with boundary conditions in each individual field of the terrain model being taken into account in a route optimization and with the a minimum consumption of fuel and operating resources can be realized with the highest possible efficiency of soil cultivation and the data of the optimum route and the data of the optimized operating state are transferred to the route data and the machine control data,
- outputting and transmitting the route control data and/or the machine control data to a control unit of the agricultural vehicle (1) and/or the agricultural machine (4).

2. Method according to claim 1,
**characterized in that**
during the automatic recording of the vehicle data, data about a vehicle geometry and about the current and/or foreseeable operating state of the agricultural vehicle are continuously recorded and/or extrapolated telemetrically by an on-board system and transmitted to a central database.

3. Method according to claim 1,
**characterized in that**
during the automatic recording of the machine data, data about a machine geometry and a current and/or predictable operating state of agricultural processing components are continuously recorded telemetrically and transmitted to a central database.

4. Method according to one of the preceding claims,
**characterized in that**
when generating the vehicle and machine model (2, 9), the automatically acquired vehicle data and the automatically acquired machine data are combined, wherein a plurality of different vehicle types can be combined with a plurality of different machine types.

5. Method according to claim 1,
**characterized in that**
collecting the data on the three-dimensional terrain topography is carried out by evaluating a previously generated geodata set.

6. Method according to claim 5,
**characterized in that**
when collecting data about the current and/or predicted terrain terrain conditions, the data from a plurality of automatic measuring stations distributed in the real terrain, in particular from measuring stations for soil moisture and/or the amount of precipitation that has fallen, are recorded and assigned to the geodata set.

7. Method according to claim 1,
**characterized in that**
the first and/or the second optimization algorithm can be adapted and influenced by specifying variable boundary conditions and/or weightings in a user-specific manner.

8. Method according to one of the preceding claims,
**characterized in that**
the method can be operated in an offline mode, wherein the method steps are carried out on an external data processing system, in particular a PC, a tablet computer and/or a cloud computer system, which is not connected to the vehicle and/or the agricultural machine.

9. Method according to one of claims 1 to 7,
**characterized in that** the method can be operated in an online mode,
wherein the method steps being carried out on a control unit integrated in the vehicle and/or the agricultural machine, in particular a vehicle computer.

10. Method according to one of the preceding claims,
**characterized in that**
the predictive generation of the data is supplemented with an acquisition of operational real-time data, wherein with the operational real-time data a current actual state of the vehicle and/or of the agricultural machine and/or of terrain conditions is recorded, wherein the real-time operational data of the vehicle and/or the agricultural machine are added to the predictive acquised route control data.

11. Method according to one of the preceding claims,
**characterized in that**
the route control data and/or the machine control data are transmitted to a control unit for an autonomous and driverless agricultural vehicle or vehicle fleet and/or a control unit for an autonomous and driverless agricultural machine or machine fleet.

## Revendications

1. Procédé de génération prédictive de données destinées à commander un trajet de déplacement et un déroulement du fonctionnement pour un véhicule agricole (1) et une machine agricole (4), comprenant les étapes de procédé suivantes consistant à
- saisir et stocker automatiquement des données de véhicule et/ou de machine par l'intermédiaire d'un dispositif capteur (3) disposé sur des véhicules individuels et/ou des machines individuelles, et générer un modèle de véhicule et de machine (2, 9),
- collecter et stocker des données provenant d'un ensemble de données géographiques généré au préalable, relatives à une topographie de terrain tridimensionnelle, à partir d'un système de géoréférencement et de cartographie, et des données relatives à une caractéristique de sol actuelle et pronostiquée par l'intermédiaire d'une pluralité de stations de mesure automatiques réparties sur le terrain réel, et attribuer à l'ensemble de données géographiques et/ou collecter et stocker des données relatives à une condition météorologique, et générer un modèle de terrain tridimensionnel géoréférencé (11) prédictif,
- reproduire avec optimisation le modèle de véhicule et de machine (2, 9) sur le modèle de terrain tridimensionnel géoréférencé (11) prédictif, et calculer des données de commande de trajet de déplacement destinées à définir un trajet de déplacement et/ou des données de commande de machine destinées à commander des composants de machine,
dans lequel
le modèle de terrain prédictif est parcouru virtuellement par le modèle de véhicule et de machine et,
lors de la reproduction avec optimisation du modèle de véhicule et de machine (2, 9) sur le modèle de terrain tridimensionnel géoréférencé prédictif, un premier algorithme d'optimisation est exécuté dans lequel un trajet de déplacement optimal est calculé en tenant compte d'une caractéristique de sol actuelle et/ou prévisible du terrain et en évitant des positions de glissement, de pente et/ou de basculement dangereuses pour le modèle de véhicule et de machine, et
lors d'un deuxième algorithme d'optimisation, un état de fonctionnement optimisé de la machine agricole, adapté au trajet de déplacement, est calculé, et
lors d'une optimisation du trajet de déplacement, des conditions marginales dans chaque champ individuel du modèle de terrain sont prises en compte, et une consommation minimale de carburant et de fluides d'exploitation peut être réalisée avec une efficacité aussi élevée que possible du travail du sol, et les données du trajet de déplacement optimal et les données de l'état de fonctionnement optimisé sont transférées dans les données de trajet de déplacement et les données de commande de machine,
- sortir et transmettre les données de commande de trajet de déplacement et/ou les données de commande de machine à une unité de commande du véhicule agricole (1) et/ou de la machine agricole (4).

2. Procédé selon la revendication 1,
**caractérisé en ce que**
lors de la saisie automatique des données du véhicule, des données relatives à une géométrie du véhicule et à l'état de fonctionnement actuel et/ou prévisible du véhicule agricole sont saisies et/ou extrapolées en continu par télémétrie par un système embarqué et sont transmises à une base de données centrale.

3. Procédé selon la revendication 1,
**caractérisé en ce que**
lors de la saisie automatique des données de la machine, des données relatives à une géométrie de la machine et à un état de fonctionnement actuel et/ou prévisible de composants de travail agricoles sont saisies en continu par télémétrie et sont transmises à une base de données centrale.

4. Procédé selon l'une des revendications précédentes,
**caractérisé en ce que**
lors de la génération du modèle de véhicule et de machine (2, 9), les données de véhicule saisies automatiquement et les données de machine saisies automatiquement sont combinées, une pluralité de types de véhicules différents pouvant être combinés avec une pluralité de types de machines différents.

5. Procédé selon la revendication 1,
**caractérisé en ce que**
la collecte des données relatives à la topographie tridimensionnelle du terrain s'effectue par une évaluation d'un ensemble de données géographiques généré au préalable.

6. Procédé selon la revendication 5,
**caractérisé en ce que**
lors de la collecte de données relatives à la caractéristique actuelle et/ou pronostiquée du terrain, les données d'une pluralité de stations de mesure automatiques réparties sur le terrain réel, en particulier de stations de mesure de l'humidité du sol et/ou de la quantité de précipitations tombées, sont saisies et attribuées à l'ensemble de donnés géographiques.

7. Procédé selon la revendication 1,
**caractérisé en ce que**
le premier et/ou le deuxième algorithme d'optimisation peuvent être adaptés et influencés de manière spécifique à l'utilisateur par la spécification de conditions marginales et/ou de pondérations modifiables.

8. Procédé selon l'une des revendications précédentes,
**caractérisé en ce que**
le procédé peut être exploité en mode hors ligne, les étapes du procédé étant exécutées sur un système externe de traitement de données non connecté au véhicule et/ou à la machine agricole, en particulier sur un PC, une tablette et/ou un système informatique en nuage.

9. Procédé selon l'une des revendications 1 à 7,
**caractérisé en ce que**
le procédé peut être exploité en mode en ligne, les étapes du procédé étant exécutées sur une unité de commande intégrée au véhicule et/ou à la machine agricole, en particulier sur un ordinateur du véhicule.

10. Procédé selon l'une des revendications précédentes,
**caractérisé en ce que**
la génération prédictive des données est complétée par une saisie avec une saisie de données opérationnelles en temps réel, un état réel momentané du véhicule et/ou de la machine agricole et/ou des caractéristiques du terrain étant saisi par les données opérationnelles en temps réel, les données opérationnelles en temps réel étant ajoutées avec mise à jour par l'unité de commande du véhicule et/ou de la machine agricole aux données de commande de trajet de déplacement déterminées de manière prédictive.

11. Procédé selon l'une des revendications précédentes,
**caractérisé en ce que**
les données de commande de trajet de déplacement et/ou les données de commande de machine sont transmises à une unité de commande pour un véhicule ou une flotte de véhicules agricoles autonomes et sans conducteur et/ou à une unité de commande pour une machine ou une flotte de machines agricoles autonomes et sans conducteur.
